# EUROPÄISCHE PATENTSCHRIFT

(11) **EP 2 324 546 B1**
(45) Veröffentlichungstag und Bekanntmachung des Hinweises auf die Patenterteilung: **05.03.2014**
(21) Anmeldenummer: 09775628.2
(22) Anmeldetag: 07.09.2009
(51) Int. Cl.: H02G 1/08

(54) **VERFAHREN UND VORRICHTUNG ZUM EXTRAHIEREN VON KABELELEMENTEN**
METHOD AND APPARATUS FOR EXTRACTING OF CABLE ELEMENTS
PROCÉDÉ ET DISPOSITIF POUR L'EXTRACTION D'ÉLÉMENTS DE CÂBLE

(30) Priorität: 08.09.2008 AT 13902008
(43) Veröffentlichungstag der Anmeldung: 25.05.2011
(73) Patentinhaber: Pichler, Alois, 3341 Ybbsitz (AT)
(72) Erfinder: Pichler, Alois, 3341 Ybbsitz (AT)
(74) Vertreter: Sonn & Partner Patentanwälte
(86) Internationale Anmeldenummer: PCT/AT2009/000350
(87) Internationale Veröffentlichungsnummer: WO 2010/025489

(56) Entgegenhaltungen:
- WO-A-2008/031536
- WO-A1-2010/025489
- CH-A- 460 897
- DE-C1- 3 819 820
- GB-A- 2 126 800
- US-A- 3 736 822

## Beschreibung

Die Erfindung betrifft ein Verfahren zum Extrahieren von Kabelelementen aus Kabelrohren in Kabelschächten, wobei das Kabelelement mit einer Klemmvorrichtung geklemmt und auf das Kabelelement eine Zugkraft ausgeübt und das Kabelelement aus dem Kabelrohr gezogen wird, wobei das Kabelelement im Kabelschacht geklemmt und schrittweise aus dem Kabelrohr gezogen wird, indem das Kabelelement nach dem Klemmen mit der Klemmvorrichtung eine Strecke im Wesentlichen in Längsrichtung des Kabelelements aus dem Kabelrohr gezogen wird, danach die Klemmvorrichtung geöffnet und um die Strecke in Richtung des Kabelrohres zurückbewegt wird, das Kabelelement erneut geklemmt und um die Strecke herausgezogen wird.

Ebenso betrifft die vorliegende Erfindung eine Vorrichtung zum Extrahieren von Kabelelementen aus Kabelrohren in Kabelschächten, mit einer Klemmvorrichtung zum Klemmen des Kabelelements und einer Vorrichtung zur Ausübung einer Zugkraft auf das Kabelelement zum Ausziehen des Kabelelements aus dem Kabelrohr.

Aus der US 2007/0048090 A1 ist eine Technik zum Verlegen von Glasfaser-Leitungen bekannt. Dabei wird zunächst mit Hilfe einer Maulwurf-Maschine eine Pilotbohrung zwischen einem Eingangs-Schacht und einem Ausgangs-Schacht gegraben und anschließend ein flexibler Leitdraht in die Pilotbohrung eingezogen. Der Leitdraht wird auf der Seite des Ausgangs-Schachts über ein Verbindungsteil mit dem einzuziehenden Leitungsbündel verbunden. Im Eingangsschacht wird eine Vorrichtung zum zyklischen Ziehen des Leitdrahts angebracht. Die Auszieh-Vorrichtung umfasst einen Rahmen mit einer Platte, welche am Eingang der Pilotbohrung zur Anlage kommt. Zum Aufbringen einer Zugkraft auf den Leitdraht sind zwei hydraulisch betätigbare Zylinder vorgesehen, an deren Enden eine Klemmvorrichtung für den Leitdraht befestigt ist. Der Leitdraht und das damit verbundene Leitungsbündel wird durch eine Vielzahl von Betätigungszyklen der Zylinder schrittweise durch die Pilotbohrung gezogen, indem der Leitdraht wiederholt geklemmt wird, die Zylinder-Kolben vorgeschoben werden, so dass der Leitdraht eine gewisse Strecke herausgezogen wird, und die Klemmvorrichtung gelöst wird, und die Kolben zurückgefahren werden.

Die WO 2008/031536 A1 zeigt ein Verfahren und eine Vorrichtung zum Ersetzen von Erdkabeln, wobei eine Grube ausgehoben wird und mit Hilfe einer außerhalb der Grube befindlichen Maschine eine Zugkraft auf das Erdkabel aufgebracht wird. Es handelt sich dabei nicht um Kabelelemente, die in Kabelrohren in Kabelschächten verlegt sind.

Die CH 460 897 A beschreibt ein Gerät zum Verlegen von Kabeln, Rohrleitungen und dergleichen mit dem das Kabel geklemmt und durch hebelartige Bewegung der Klemmvorrichtung, Stück für Stück bewegt wird. Dabei handelt es sich um ein Gerät zum Verlegen von Kabeln und nicht zum Extrahieren von Kabeln, wie es bei der gegenständlichen Anmeldung der Fall ist. Die zum Extrahieren von Kabelelementen aus Kabelrohren in Kabelschächten erforderlichen Zugkräfte könnten mit dem Gerät gemäß diesem Stand der Technik nicht aufgebracht werden.

Schließlich zeigt die GB 2 126 800 A eine Vorrichtung zum Bewegen von Erdkabeln, wobei das Erdreich längs des Kabels gelockert wird, um damit das Herausziehen oder den Austausch des Kabels vorzubereiten ohne die Erdoberfläche auf der ganzen Verlegungsstrecke aufgraben zu müssen. Dabei wird ein Kabelräumgerät entlang des Kabels bewegt und damit das umgebende Erdreich gelockert.

Unter den Begriff "Kabelelement" fallen sowohl komplette Kabel, wie sie üblicherweise in Kabelrohren verlegt sind, als auch Teile von Kabeln, wie z.B. einzelne Litzen oder Bündel von Litzen eines Kabels.

Die vorliegende Erfindung bezieht sich in erster Linie auf so genannte Röhrenkabel, insbesondere für die Telekommunikation, Stromversorgung, Fernsehen, usw., welche üblicherweise in einem Kunststoff- oder Betonrohr verlegt werden. Meistens wird nur ein Kabel pro Kabelrohr, welches einen Durchmesser von beispielsweise 100 mm aufweist, verlegt. Es können aber auch mehrere Kabel oder auch andere Leitungen in derartigen Kabelrohren verlegt werden. Röhrenkabel sind an der Außenseite häufig mit einem wasserabweisenden Medium, insbesondere Teer, versehen, welches das Eindringen von Feuchtigkeit in das Innere des Kabels verhindert. Sowohl das wasserabweisende Medium als auch der Mantel des Kabels, welcher aus Kunststoff oder Blei bestehen kann, klebt in der Regel an der Innenseite des Kabelrohres an, wodurch ein Ausziehen derartiger Kabel erschwert wird. Verstärkt wird diese Klebewirkung dadurch, dass während des Einziehens eines solchen Kabels Reibungswärme entsteht, welche das wasserabweisende Medium aber auch den Kabelmantel erweicht und mit der Innenseite des Kabelrohres eine Verbindung herstellt. Eine Wärmeentwicklung kann auch bei bereits verlegten Kabeln durch den Stromfluss durch die Litzen des Kabels entstehen. Auch Schmutz im Kabelrohr führt zu einer Verbindung zwischen dem Kabelrohr und dem Kabel und erschwert ein Ausziehen des Kabels.

Zum Ausziehen von Kabeln aus Kabelrohren in Kabelschächten müssen daher relativ hohe Zugkräfte auf das Kabel aufgebracht werden, welche in der Lage sind, die Verbindung zwischen dem Kabel und dem Kabelrohr zu lösen und das Gewicht des Kabels zu ziehen. Nachdem die Kabelschächte, welche einen Zugang zu den Kabelrohren bieten, meist relativ klein sind, werden die Vorrichtungen zum Ausziehen des Kabels aus den Kabelrohren häufig außerhalb der Schächte angeordnet. Dies erfordert die Anordnung entsprechender Umlenkrollen, welche das auszuziehende Kabel vom Ende des Kabelrohres bis zur Vorrichtung zum Aufbringen einer Zugkraft auf das Kabel, z.B. eine entsprechende Seilwinde, leiten. Bei jeder Umlenkrolle geht ein beträchtlicher Teil der Zugkraft verloren, welcher durch diese aufgenommen werden muss. Bei der Anordnung mehrerer Umlenkrollen steht schließlich nur mehr ein Bruchteil der von der Seilwinde aufgebrachten Zugkraft für das Herausziehen des Kabels aus dem Kabelrohr zur Verfügung. Um jedoch die häufig im Kabelrohr festgeklebten Kabel lösen zu können, muss die Seilwinde eine entsprechend hohe Zugkraft liefern können. Dementsprechend voluminös und schwer müssen die Seilwinde aber auch die Umlenkrollen ausgebildet sein, wodurch sich der Ausziehvorgang besonders beschwerlich und auch Zeit- und Kostenintensiv, gestaltet.

Zur Verbesserung wurden bereits Vorrichtungen zur Aufbringung der Zugkraft im Schacht angeordnet, sodass die Umlenkrollen zur Führung des Kabels zur Seilwinde vermieden werden können oder zumindest deren Anzahl reduziert werden kann. Allerdings sind derartige Winden, beispielsweise Quetschwinden, die zur kontinuierlichen Extraktion des Kabels aus dem Kabelrohr eingesetzt werden, ebenfalls relativ schwer und voluminös, weshalb eine Handhabung in einem Kabelschacht entsprechend aufwändig ist.

Die Aufgabe der vorliegenden Erfindung besteht daher in der Schaffung eines oben genannten Verfahrens zum Extrahieren von Kabelelementen aus Kabelrohren in Kabelschächten, welches möglichst einfach, rasch und kostengünstig durchführbar ist, und die Nachteile bekannter Verfahren vermeidet oder zumindest reduziert.

Eine weitere Aufgabe besteht in der Schaffung einer oben genannten Vorrichtung zum Extrahieren von Kabelelementen aus Kabelrohren in Kabelschächten, welche möglichst klein und leicht sowie kostengünstig herstellbar ist und eine rasche und einfache Anwendung in einem Kabelschacht zulässt. Die Vorrichtung soll in der Lage sein, eine entsprechende Zugkraft auf das Kabelelement aufzubringen, sodass eine Lösung des Kabelelements aus dem Kabelrohr möglich ist, und ein rasches Ausziehen des Kabelelements aus dem Kabelrohr gewährleistet wird.

Gelöst wird die erfindungsgemäße Aufgabe durch ein oben genanntes Verfahren, bei dem die Klemmvorrichtung auf einem Schlitten um die Strecken translatorisch gegenüber einem Basisteil bewegt wird, und mit einer durch einen zwischen den Basisteil und dem Schlitten angeordneten Antrieb zur Erzielung der translatorischen Bewegung des Schlittens gegenüber dem Basisteil, eine Zugkraft auf das Kabelelement im Wesentlichen in Längsrichtung des Kabelelements aufgebracht wird, und der Basisteil über einen Adapter zur Anordnung am Ende des Kabelrohres an einer das Kabelrohr umgebenden Wand des Kabelschachts abgestützt wird.. Durch das schrittweise Herausziehen des Kabelelements aus dem Kabelrohr kann das Verfahren auch im Kabelschacht direkt vorgenommen werden. Dadurch dass die Zugkraft auf das Kabelelement im Wesentlichen in Längsrichtung des Kabelelements aufgebracht wird, kann im Wesentlichen die volle Zugkraft auf das Kabel wirken. Das erfindungsgemäße Verfahren wird insbesondere dann angewendet, wenn die Kabel bzw. Kabelelemente im Kabelrohr festkleben. Nach der Lösung des Kabelelements im Kabelrohr können auch herkömmliche Verfahren zum Extrahieren der Kabelelemente verwendet werden.

Vorzugsweise wird das aus dem Kabelrohr gezogene Kabelelement aus dem Kabelschacht geführt und aufgerollt. Die Führung des Kabelelements aus dem Kabelschacht kann durch entsprechende, an sich bekannte Umlenkrollen oder dgl. erfolgen. Das aufgerollte, ausgezogene Kabelelement kann danach einer Wiederverwertung, insbesondere der Wiederverwertung des üblicherweise im Kabel enthaltenen Kupfers der Kupferlitzen, zugeführt werden.

Alternativ zum Aufrollen des ausgezogenen Kabelelements oder auch in Kombination mit dem Aufrollen kann das aus dem Kabelrohr gezogene Kabelelement auch geschnitten werden. Dadurch können Kabelstücke in gewünschter Länge erzeugt werden, deren Abtransport einfacher ist. Beispielsweise eignet sich dieses Verfahren auf stark befahrenen Straßen, wo eine Umleitung des Verkehrs um den Schacht zur Anordnung einer Winde und Trommel nicht möglich ist, besonders.

Um das Kabelelement im Kabelrohr zu lösen, kann vor dem Auszugsvorgang ein entsprechendes Lösungsmittel eingebracht werden. Wie bereits oben erwähnt, sind Kabel häufig mit einer Teerschicht umgeben. Diese kann beispielsweise durch Anwendung von Fettsäuremethylester (Biodiesel) erweicht werden.

Das Lösungsmittel kann sehr einfach und rasch in das Kabelrohr eingebracht werden, indem es zerstäubt und in das Kabelrohr eingeblasen wird. Zum Einblasen können herkömmliche Kompressoren verwendet werden.

Wie bereits oben erwähnt, kann nach dem Lösen des Kabelelements aus dem Kabelrohr durch das schrittweise erfindungsgemäße Ausziehen aus dem Kabelrohr das Kabelelement kontinuierlich aus dem Kabelrohr gezogen werden. Durch die Anwendung eines an sich bekannten kontinuierlichen Ausziehverfahrens, welches beispielsweise mit einer entsprechenden Quetschwinde vorgenommen werden kann, ist meist ein rascherer Ausziehvorgang möglich.

Das Kabelelement wird vorzugsweise hydraulisch geklemmt. Mit entsprechenden Hydraulikzylindern kann eine ausreichend große Klemmkraft auf das Kabelelement aufgebracht werden. Beim Ausziehen vollständiger Kabel ist es zweckmäßig, eine besonders hohe Klemmkraft, beispielsweise im Bereich einiger Tonnen, aufzubringen, sodass der Kabelmantel mit dem Inneren des Kabels fest verbunden wird, sodass beim Ausziehvorgang eine Relativbewegung zwischen einzelnen Kabelelementen nicht stattfinden kann.

Gelöst wird die erfindungsgemäße Aufgabe auch durch eine oben genannte Vorrichtung zum Extrahieren von Kabelelementen aus Kabelrohren in Kabelschächten, wobei die Klemmvorrichtung auf einem Schlitten angeordnet ist, welcher Schlitten im Wesentlichen in Längsrichtung des Kabelelements translatorisch beweglich auf einem Basisteil angeordnet ist, und die Vorrichtung zur Ausübung einer Zugkraft auf das Kabelelement im Wesentlichen in Längsrichtung des Kabelelements durch zumindest einen zwischen dem Basisteil und dem Schlitten angeordneten Antrieb zur Erzielung der translatorischen Bewegung des Schlittens gegenüber dem Basisteil vorgesehen ist, und der Basisteil zur Abstützung an einer das Kabelrohr umgebenden Wand des Kabelschachts ausgebildet ist, indem am Basisteil ein Adapter zur Anordnung am Ende des Kabelrohres angeordnet ist. Durch eine derartige Ausbildung einer Vorrichtung zum Extrahieren von Kabelelementen ist eine kleine und leichte Konstruktion möglich, welche rasch und einfach in einen Kabelschacht eingebracht und dort angewendet werden kann. Wesentlich dabei ist, dass sich die Vorrichtung bzw. dessen Basisteil an einer das Kabelrohr umgebenden Wand abstützt, sodass die aufgebrachte Zugkraft auf das Kabelelement im Wesentlichen vollständig für den Ausziehvorgang zur Verfügung steht. Die entsprechende Gegenkraft zur Zugkraft wird über den Adapter in die Wand des Kabelschachts eingeleitet, ohne dass Stützkonstruktionen oder dgl. belastet werden. Somit können entsprechende Stützkonstruktionen, welche die Vorrichtung schwerer handhabbar machen, in der Regel entfallen. Der Adapter ragt teilweise in das Kabelrohr mit dem auszuziehenden Kabelelement hinein. Zur Fixierung der Vorrichtung im Kabelrohr des auszuziehenden Kabelelements können auch entsprechende Keile oder dgl. zwischen Adapter und Innenwand des Kabelrohres angeordnet werden.

Vorzugsweise ist die Klemmvorrichtung lösbar mit dem Schlitten verbunden. Durch die lösbare Verbindung kann die Vorrichtung geteilt und somit leichter in den Kabelschacht eingebracht werden. Die lösbare Verbindung zwischen Klemmvorrichtung und Schlitten lässt vorzugsweise eine werkzeuglose Verbindung und Trennung zu. Zusätzlich ist es bei entsprechender Konstruktion möglich, die Klemmvorrichtung auch verschiedenartig am Schlitten anzuordnen, je nach den Platzverhältnissen im Kabelschacht. Insbesondere kann die Klemmvorrichtung auf dem Schlitten angeordnet werden, um die Klemmung des Kabelelements innerhalb des Schlittens vorzunehmen oder auch in Zugrichtung gesehen vor dem Schlitten angeordnet werden, sodass die Klemmung des Kabelelements außerhalb des Schlittens erfolgt.

Vorzugsweise ist der Adapter rotationssymmetrisch ausgebildet und üblicherweise entsprechend dem Kabelrohr gestaltet. Bei üblicherweise runden Kabelrohren wird der Adapter somit bevorzugt eine zylindrische oder teilweise zylindrische Form haben. Dadurch wird gewährleistet, dass die gesamte Vorrichtung um 360° gegenüber dem Kabelrohr gedreht werden kann und je nach vorhandenem Platz in einer gewünschten Lage platziert werden kann.

Die Klemmvorrichtung umfasst vorzugsweise zumindest einen Hydraulikzylinder. Der oder die Hydraulikzylinder sind mit einem entsprechenden Hydraulikaggregat oder auch einer Handpumpe verbunden. Theoretisch sind auch andere, beispielsweise mechanische Klemmvorrichtungen möglich, welche jedoch wartungsanfälliger sind und mehr Zeit für den Klemmvorgang benötigen.

Um eine optimale Klemmung des Kabelelements zu erzielen und ein Durchrutschen desselben zu verhindern, weist die Klemmvorrichtung zwei, vorzugsweise profilierte, Klemmplatten auf. Diese profilierten, beispielsweise gewellt oder gezahnt ausgebildeten Klemmplatten werden in das auszuziehende Kabelelement eingepresst und verhindern ein Durchrutschen desselben, sodass die vollständige Zugkraft auf das Kabelelement wirken kann. Anstelle der Verwendung von ebenen Klemmplatten können auch geeignet geformte Klemmplatten, beispielsweise ein U-förmig geformtes unteres Klemmprofil, in welche das auszuziehende Kabel bzw. Kabelelement eingelegt wird und eine zwischen den Schenkeln des U-förmigen Profils eingelegte obere Klemmplatte, verwendet werden.

Auch der Antrieb zur Erzielung einer translatorischen Bewegung des Schlittens gegenüber dem Basisteil ist vorzugsweise durch zumindest einen Hydraulikzylinder gebildet. Wie bereits oben erwähnt, sind die Hydraulikzylinder mit einem entsprechenden Hydraulikaggregat oder einer Handpumpe verbunden. Um eine symmetrische Anordnung des Antriebs beiderseits des auszuziehenden Kabelelements zu erzielen, werden am besten zwei Hydraulikzylinder beiderseits des auszuziehenden Kabelelements angeordnet. Mit solchen Hydraulikzylindern kann eine hohe Kraft bei gleichzeitig geringer Baugröße erzielt werden.

Zur leichten Handhabbarkeit der Extraktionsvorrichtung sind die Hydraulikzylinder mit entsprechenden Bedienelementen verbunden. Im einfachsten Fall existieren zwei Bedienelemente, wobei ein Bedienelement mit den Hydraulikzylindern der Klemmvorrichtung verbunden ist und die Klemmung des Kabelelements entsprechend steuert, während das andere Bedienelement mit den Hydraulikzylindern des Antriebs zur Erzielung der translatorischen Bewegung des Schlittens verbunden ist und die Vor- und Rückbewegung des Schlittens gegenüber dem Basisteil steuert. Die Bedienung kann manuell oder auch automatisch oder teilautomatisch erfolgen.

Der Basisteil ist vorzugsweise durch zwei parallele Schienen gebildet, zwischen welchen das aus dem Kabelrohr zu ziehende Kabelelement anordenbar ist. Diese Konstruktion kann einfach hergestellt werden und ist durch die symmetrische Anordnung entsprechend robust.

Vorzugsweise ist eine Vorrichtung zum Einbringen eines Lösungsmittels in das Kabelrohr vorgesehen, sodass vor bzw. während des Ausziehvorgangs das allenfalls vorhandene wasserabweisende Medium an der Außenseite des Kabelelements erweicht und somit der Ausziehvorgang erleichtert werden kann. Als Lösungsmittel für den häufig verwendeten Teer an der Außenseite des Kabelelements eignet sich Fettsäuremethylester (Biodiesel) besonders. Zudem ist Biodiesel relativ billig und biologisch abbaubar, sodass eine Kontamination des Erdreichs unbedenklich ist.

Für eine allenfalls zweckmäßige Abstützung der Extraktionsvorrichtung im Kabelschacht können am Basiselement entsprechende Stützelemente oder Vorrichtungen zur Anbringung von Stützelementen vorgesehen sein. In einfachster Form können derartige Vorrichtungen durch Laschen oder dgl. am Basiselement gebildet sein, zwischen welchen entsprechende Stützen oder Bolzen zu Wänden im Kabelschacht angeordnet werden können.

Sobald das Kabelelement vom Kabelrohr gelöst wurde, kann eine mit dem Schlitten verbindbare Vorrichtung zum kontinuierlichen Ausziehen des Kabelelements eingesetzt werden, durch die ein rascherer Ausziehvorgang ermöglicht wird. Eine derartige Vorrichtung zum kontinuierlichen Ausziehen des Kabelelements kann beispielsweise durch eine Seilwinde oder Quetschwinde gebildet sein.

Durch eine Vorrichtung zum Abschneiden des Kabelelements, welche beispielsweise auch am Schlitten angeordnet und mit diesem verbindbar ausgebildet sein kann, ist es möglich, das Kabelelement an gewünschten Stellen abzuschneiden, um beispielsweise leichter abtransportierbare kurze Kabelstücke herzustellen.

Die vorliegende Erfindung wird anhand der beigefügten Zeichnungen näher erläutert. Darin zeigen
Fig. 1 einen Kabelschacht im Querschnitt;
Fig. 2 die Anwendung eines herkömmlichen Verfahrens zum Ausziehen eines Kabelelements aus dem Kabelrohr in einem Kabelschacht;
Fig. 3 ein alternatives Verfahren zum Ausziehen eines Kabelrohrs aus dem Kabelrohr eines Kabelschachts nach dem Stand der Technik;
Fig. 4A bis 4D das Prinzip des erfindungsgemäßen Verfahrens zum Extrahieren eines Kabelelements aus dem Kabelrohr in einem Kabelschacht;
Fig. 5 eine Ausführungsform einer erfindungsgemäßen Vorrichtung zum Extrahieren eines Kabelelements aus Kabelrohren in Kabelschächten in Seitenansicht;
Fig. 6 die Vorrichtung gemäß Fig. 5 in Draufsicht; und
Fig. 7 eine alternative Ausführungsform einer erfindungsgemäßen Vorrichtung zum Extrahieren von Kabelelementen aus Kabelrohren in Kabelschächten.

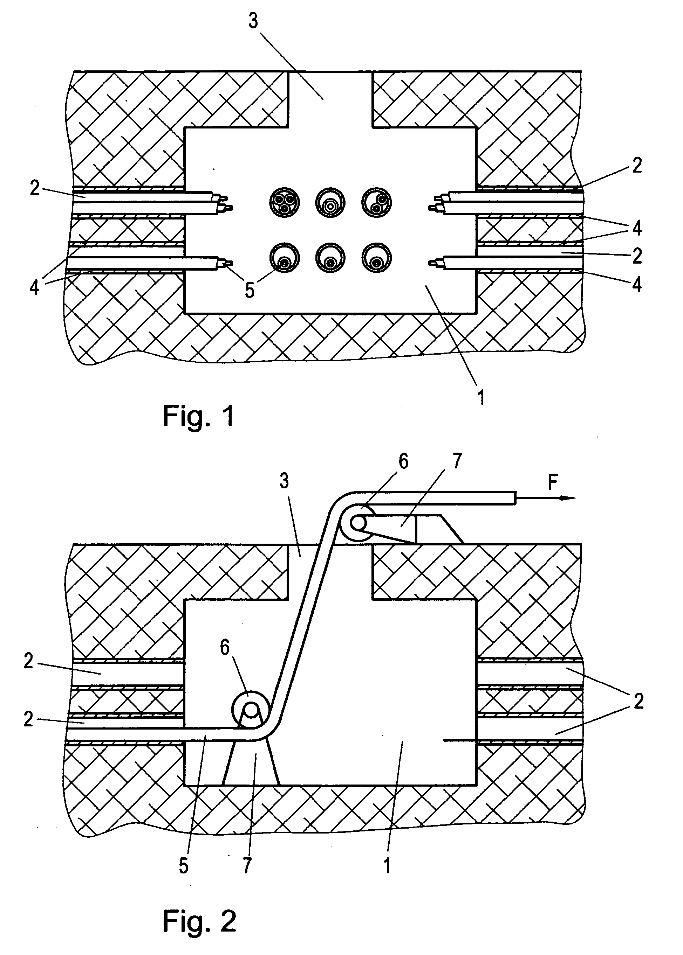

Fig. 1 zeigt einen Kabelschacht 1 im Querschnitt, in dem mehrere Kabelrohre 2 zusammenlaufen. Der Kabelschacht 1 ist über einen üblicherweise vertikal angeordneten Zugang 3, der mit einem entsprechenden Deckel (nicht dargestellt) verschlossen wird, begehbar. Im Kabelschacht 1 laufen mehrere Kabelrohre 2 zusammen, die jeweils ein oder auch mehrere Kabelelemente 5 aufweisen. Die Kabelrohre 2 können mit einer Auskleidung 4, beispielsweise aus Kunststoff, versehen sein. Im Kabelschacht 1 werden die Kabelelemente 5 aufgeteilt und beispielsweise in entsprechende Rohre zur Verbindung mit den einzelnen Haushalten weiterverlegt oder die Kabelelemente bloß miteinander verbunden. Üblicherweise sind die Kabelelemente 5 mit Teer, Kunststoff, insbesondere PVC, oder sonstigen Materialien umgeben, welche im Kabelrohr 2 bzw. der Auskleidung 4 festkleben und den Ausziehvorgang eines solchen Kabelelements 5 erschweren können. Aber auch bei Bleimantelkabeln oder Kunststoffkabeln kann es durch Wärmeentwicklung oder andere Verbindungen beim Einziehvorgang zu einem Verkleben der Oberfläche des Kabelelements 5 mit dem Kabelrohr 2 bzw. der Auskleidung 4 kommen. In der Folge muss zum Ausziehen eines derartigen Kabelelements 5 eine relativ hohe Zugkraft aufgebracht werden.

Fig. 2 zeigt schematisch ein Ausziehverfahren gemäß dem Stand der Technik, bei dem das Kabelelement 5 über Umlenkrollen 6 über den vertikalen Zugang 3 aus dem Kabelschacht 1 geführt wird, und außerhalb des Kabelschachts 1 eine entsprechende Zugkraft F auf das Kabelelement aufgebracht wird. Die Zugkraft F kann durch entsprechende Seilwinden oder dgl. erzeugt werden (nicht dargestellt). Durch das erwähnte Festkleben der Kabelelemente 5 im Kabelrohr 2 muss üblicherweise eine besonders hohe Zugkraft F auf das Kabelelement 5 wirken, um ein Ausziehen zu ermöglichen. Beispielsweise sind Zugkräfte von 3000-6000 kg oder mehr üblich. Durch die verwendeten Umlenkrollen 6 zum Umlenken des Kabelelements 5 aus dem Kabelschacht 1 und zur Führung desselben zur Seilwinde oder dgl. (nicht dargestellt) werden beträchtliche Teile der Zugkraft F abgeleitet, ohne auf das Kabelelement 5 einzuwirken. Zur Aufnahme dieser beträchtlichen Teile der Zugkraft F müssen die Umlenkrollen 6 und entsprechende Stützen 7 entsprechend stabil ausgeführt sein. Dadurch sind die Umlenkrollen 6 sowie die Stützen 7 besonders schwer und voluminös, sodass deren Anbringung im Kabelschacht 1 bzw. außerhalb des Kabelschachts 1 aufwändig ist.

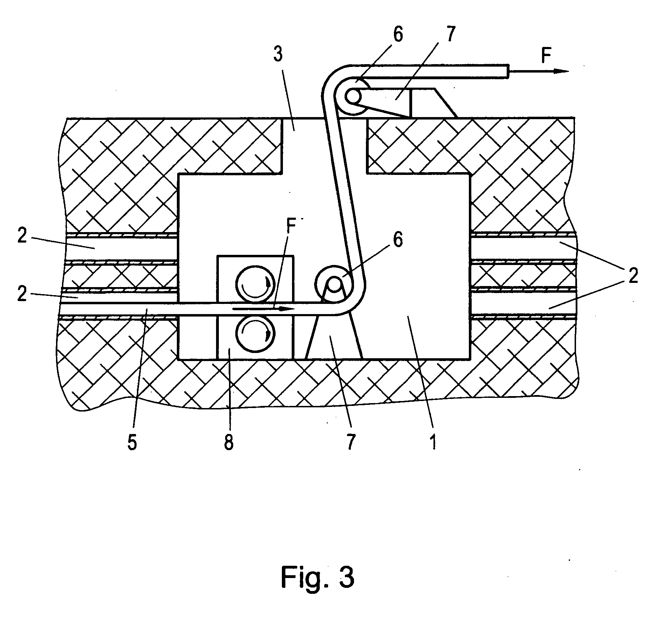

Fig. 3 zeigt das Prinzip eines weiteren Verfahrens des Standes der Technik zum Ausziehen eines Kabelelements 5 aus dem Kabelrohr 2 in einem Kabelschacht 1, wobei eine Vorrichtung 8 zum Aufbringen einer Zugkraft F auf das Kabelelement 5 im Kabelschacht 1 angeordnet ist. Eine derartige Vorrichtung 8 kann beispielsweise durch eine Quetschwinde, bestehend aus zwei Rollen 9, zwischen denen das Kabelelement 5 geklemmt wird, gebildet sein. Eine derartige Vorrichtung 8, die auch die üblichen Zugkräfte F zum Ausziehen eines Kabelelements 5 aus einem Kabelrohr 2 erzeugen kann, und auch entsprechende Abstützeinrichtungen (nicht dargestellt) sind besonders voluminös und schwer, weshalb deren Handhabung im Kabelschacht 1 ebenfalls aufwändig ist.

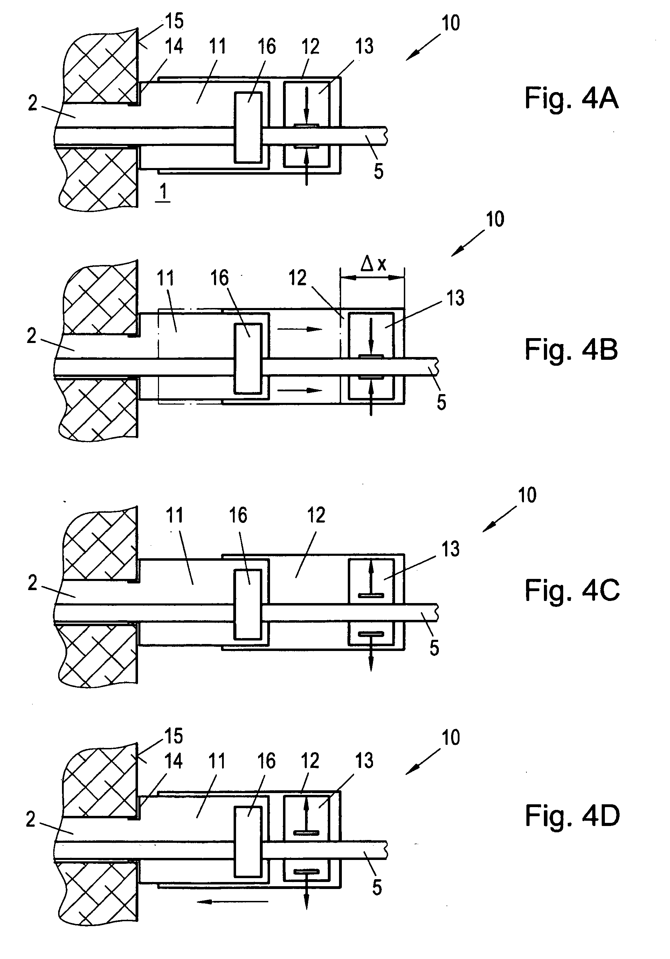

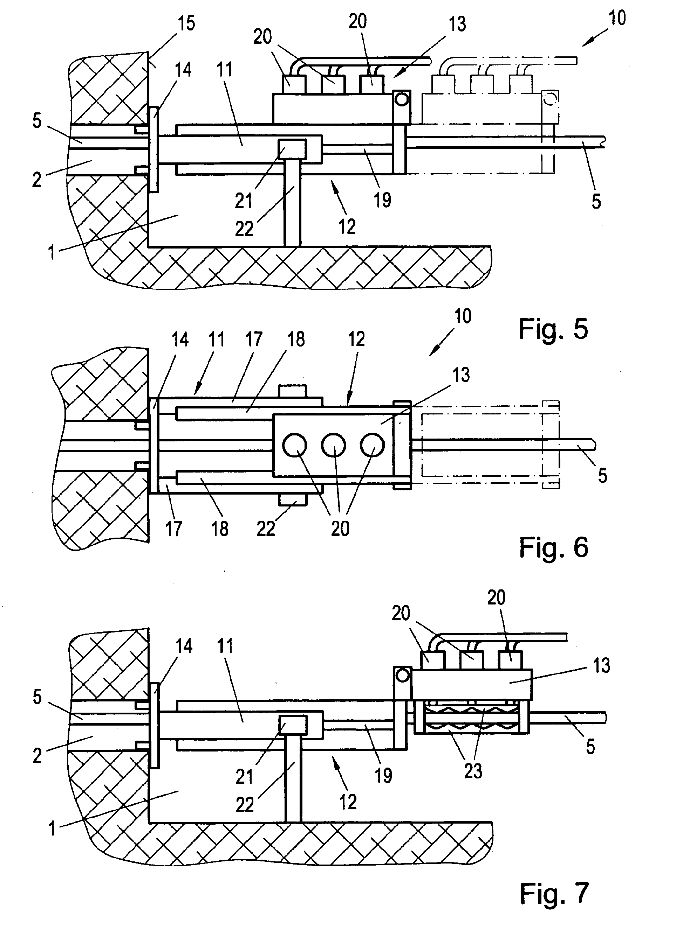

Die Fig. 4A bis 4D zeigen das Prinzip des erfindungsgemäßen Verfahrens und der erfindungsgemäßen Vorrichtung zum Extrahieren eines Kabelelements 5 aus dem Kabelrohr 2 in einem Kabelschacht 1. Die Vorrichtung 10 besteht im Wesentlichen aus einem Basisteil 11 und einem gegenüber dem Basisteil 11 im Wesentlichen in Längsrichtung des Kabelelements 5 translatorisch bewegbaren Schlitten 12 mit einer Klemmvorrichtung 13. Der Basisteil 11 weist einen Adapter 14 zur Anordnung und Abstützung am Ende des Kabelrohrs 2 mit dem auszuziehenden Kabelelement 5 auf. Somit wird der Basisteil 11 direkt vor dem Kabelrohr 2 des auszuziehenden Kabelelements 5 angeordnet und stützt sich an der Wand 15, welche die Öffnung des Kabelrohrs 2 umgibt, entsprechend ab. Durch die direkte Abstützung des Basisteils 11 an der Wand 15 im Kabelschacht 1 werden keine Zwischenelemente benötigt, die während des Ausziehvorgangs mit einer entsprechend hohen Kraft beansprucht würden. Somit kann die gesamte Zugkraft von beispielsweise 2-6 t direkt und ohne Gefahr auf das auszuziehende Kabelelement 5 aufgebracht werden. Durch das erfindungsgemäße Verfahren und die erfindungsgemäße Vorrichtung kann die Sicherheit während des Ausziehvorgangs wesentlich erhöht werden, da die Zugkraft direkt auf das Kabelelement 5 aufgebracht wird und im Kabelschacht 1 keine Spannungen auftreten. In der Folge kann die erfindungsgemäße Vorrichtung 10 besonders klein und leicht ausgebildet werden, sodass sie rasch und einfach im Kabelschacht 1 platziert werden kann. Gemäß Fig. 4A wird das Kabelelement 5 durch die Klemmvorrichtung 13 geklemmt und danach gemäß Fig. 4B der Schlitten 12 gegenüber dem Basisteil 11 in Längsrichtung des Kabelelements 5 um eine Strecke Δx verschoben. Zum Verschieben des Schlittens 12 gegenüber dem Basisteil 11 ist ein entsprechender Antrieb 16 vorgesehen, der beispielsweise durch Hydraulikzylinder 19 (s. Fig. 5-7) gebildet sein kann. Im Wesentlichen wirkt die volle vom Antrieb 16 aufgebrachte Kraft auf das Kabelelement 5. Die entsprechende Gegenkraft wird über den Adapter 14 des Basisteils 11 in die Wand 15 des Kabelschachts 1 eingeleitet. Nach dem Verschieben des Schlittens 12 zusammen mit dem darin geklemmten Kabelelement 5 wird gemäß Fig. 4C die Klemmung gelöst und danach gemäß Fig. 4D der Schlitten 12 wieder um die Strecke Δx in Richtung des Kabelrohres 2 bewegt. Danach wird mit der Klemmung gemäß Fig. 4A fortgefahren. Somit wird das Kabelelement 5 schrittweise aus dem Kabelrohr 2 herausbewegt. Nach dem Lösen des allenfalls festgeklebten Kabelelements 5 im Kabelrohr 2 kann der Ausziehvorgang auch mit einem herkömmlichen kontinuierlichen Ausziehverfahren fortgesetzt werden.

Weiters ist es möglich, vor dem Ausziehvorgang oder auch währenddessen ein Lösungsmittel, beispielsweise Fettsäuremethylester (Biodiesel), in das Kabelrohr 2 einzubringen, beispielsweise mittels Druckluft einzublasen, wodurch ein allfälliger Mantel aus Teer um das Kabelelement 5 erweicht und der Ausziehvorgang erleichtert werden kann.

Die Fig. 5 und 6 zeigen eine Ausführungsform einer erfindungsgemäßen Vorrichtung 10 zum Extrahieren eines Kabelelements 5 aus einem Kabelrohr 2 in einem Kabelschacht 1 in Seitenansicht und Draufsicht. Die Vorrichtung 10 besteht aus einem Basisteil 11, der im Wesentlichen durch zwei parallele Schienen 17 gebildet ist. Der Basisteil 11 ist mit einem Adapter 14 versehen, oder mit diesem einteilig ausgebildet, der teilweise in das Kabelrohr 2 ragt. Der Adapter 14 ist so wie das üblicherweise rund ausgebildete Kabelrohr 2 rotationssymmetrisch, sodass die gesamte Vorrichtung 10 zum Extrahieren des Kabelelements 5 aus dem Kabelrohr 2 um 360° gegenüber dem Kabelrohr 2 gedreht werden kann. Dies ist insbesondere bei engen Platzverhältnissen im Kabelschacht 1 von Vorteil, da die Vorrichtung 10 so angeordnet werden kann, dass ausreichend Platz zur Klemmung des Kabelelements 5 zur Verfügung steht. Eine Fixierung des Adapters 14 im Kabelrohr 2 kann beispielsweise durch entsprechende Keile oder dgl. vorgenommen werden. Der Schlitten 12 ist ebenfalls aus Schienen 18 gebildet, welche an den Schienen 17 des Basisteils 11 in Längsrichtung des Kabelelements 5 verschiebbar angeordnet sind. Über zwei Hydraulikzylinder 19 wird die translatorische Bewegung des Schlittens 12 gegenüber dem Basisteil 11 erzielt. Die Klemmvorrichtung 13 ist lösbar mit dem Schlitten 12 verbunden und weist in der dargestellten Variante drei Hydraulikzylinder 20 zur Klemmung des Kabelelements 5 auf. Die Hydraulikzylinder 19, 20 sind mit einem entsprechenden Hydraulikaggregat oder auch einer Handpumpe verbunden (nicht dargestellt). Am Basiselement 11 können Vorrichtungen 21 zur Anbringung von Stützelementen 22 vorgesehen sein. Nach dem Klemmen des Kabelelements 5 über die Hydraulikzylinder 20 an der Klemmvorrichtung 13 wird der Schlitten 12 zusammen mit der Klemmvorrichtung 13 durch die Hydraulikzylinder 19 in Längsrichtung des Kabelelements 5 bewegt und dadurch das Kabelelement 5 aus dem Kabelrohr 2 gezogen. Danach wird, wie in den Fig. 4A-4D beschrieben, die Klemmung gelöst und der Schlitten 12 wieder zurückbewegt und nach einer erneuten Klemmung das Kabelelement 5 schrittweise aus dem Kabelrohr 2 gezogen.

Durch die bevorzugte lösbare Verbindung der Klemmvorrichtung 13 mit dem Schlitten 12 kann die Vorrichtung 10 einfach geteilt und können die Einzelteile rasch und einfach in den Kabelschacht 1 eingebracht werden. Zusätzlich ist es möglich, die Klemmvorrichtung 13 auch wie in Fig. 7 dargestellt anzuordnen. Dabei wurde die Klemmvorrichtung 13 gegenüber der Variante gemäß den Fig. 5 und 6 gewendet und in Zugrichtung gesehen vor dem Schlitten 12 platziert, nämlich außerhalb des Schlittens 12, und mit diesem durch entsprechende Verbindungselemente verbunden. Auf diese Weise kann bei Platzmangel seitlich neben dem Kabelelement 5 dieses leichter geklemmt und aus dem Kabelrohr 2 ausgezogen werden. Aus Fig. 7 ist weiters ersichtlich, dass die Klemmvorrichtung 13 vorzugsweise zwei entsprechend profilierte Klemmplatten 23, zwischen welchen das Kabelelement 5 eingequetscht wird, aufweist.

Die Fig. 5-7 zeigen nur eine von vielen möglichen Ausführungsformen zur Durchführung des erfindungsgemäßen Verfahrens. Durch die direkte Anwendung des Verfahrens und der Vorrichtung im Kabelschacht 1 an der Öffnung des Kabelrohrs 2 mit dem auszuziehenden Kabelelement 5 kann die Vorrichtung 10 besonders einfach und leicht aufgebaut werden und rasch im Kabelschacht 1 angeordnet und wieder aus diesem entfernt werden.

## Patentansprüche

1. Verfahren zum Extrahieren von Kabelelementen (5) aus Kabelrohren (2) in Kabelschächten (1), wobei das Kabelelement (5) mit einer Klemmvorrichtung (13) geklemmt und auf das Kabelelement (5) eine Zugkraft (F) ausgeübt und das Kabelelement (5) aus dem Kabelrohr (2) gezogen wird, wobei das Kabelelement (5) im Kabelschacht (1) geklemmt und schrittweise aus dem Kabelrohr (2) gezogen wird, indem das Kabelelement (5) nach dem Klemmen mit der Klemmvorrichtung (13) eine Strecke (Δx) im Wesentlichen in Längsrichtung des Kabelelements (5) aus dem Kabelrohr (2) gezogen wird, danach die Klemmvorrichtung (13) geöffnet und um die Strecke (Δx) in Richtung des Kabelrohres (2) zurückbewegt wird, das Kabelelement (5) erneut geklemmt und um die Strecke (Δx) herausgezogen wird, **dadurch gekennzeichnet, dass** die Klemmvorrichtung (13) auf einem Schlitten (12) im Wesentlichen in Längsrichtung des Kabelelements (5) um die Strecken (Δx) translatorisch gegenüber einem Basisteil (11) bewegt wird, und mit einer durch einen zwischen dem Basisteil (11) und dem Schlitten (12) angeordneten Antrieb (16) zur Erzielung der translatorischen Bewegung des Schlittens (12) gegenüber dem Basisteil (11) eine Zugkraft (F) auf das Kabelelement (5) im Wesentlichen in Längsrichtung des Kabelelements aufgebracht wird, und der Basisteil (11) über einen Adapter (14) zur Anordnung am Ende des Kabelrohres (2) an einer das Kabelrohr (2) umgebenden Wand (15) des Kabelschachts (1) abgestützt wird.

2. Verfahren nach Anspruch 1, **dadurch gekennzeichnet, dass** das aus dem Kabelrohr (2) gezogene Kabelelement (5) abgeschnitten wird.

3. Verfahren nach Anspruch 1 oder 2, **dadurch gekennzeichnet, dass** in das Kabelrohr (2) ein Lösungsmittel eingebracht wird.

4. Verfahren nach Anspruch 3, **dadurch gekennzeichnet, dass** das Lösungsmittel zerstäubt und in das Kabelrohr (2) eingeblasen wird.

5. Verfahren nach einem der Ansprüche 1 bis 4, **dadurch gekennzeichnet, dass** das Kabelelement (5) hydraulisch geklemmt wird.

6. Vorrichtung (10) zum Extrahieren von Kabelelementen (5) aus Kabelrohren (2) in Kabelschächten (1), mit einer Klemmvorrichtung (13) zum Klemmen des Kabelelements (5) und einer Vorrichtung (8) zur Ausübung einer Zugkraft (F) auf das Kabelelement (5) zum Ausziehen des Kabelelements (5) aus dem Kabelrohr (2), **dadurch gekennzeichnet, dass** die Klemmvorrichtung (13) auf einem Schlitten (12) angeordnet ist, welcher Schlitten (12) im Wesentlichen in Längsrichtung des Kabelelements (5) translatorisch beweglich auf einem Basisteil (11) angeordnet ist, und dass die Vorrichtung (8) zur Ausübung einer Zugkraft (F) auf das Kabelelement (5) im Wesentlichen in Längsrichtung des Kabelelements (5) durch zumindest einen zwischen dem Basisteil (11) und dem Schlitten (12) angeordneten Antrieb (16) zur Erzielung der translatorischen Bewegung des Schlittens (12) gegenüber dem Basisteil (11) vorgesehen ist, und dass der Basisteil (11) zur Abstützung an einer das Kabelrohr (2) umgebenden Wand (15) des Kabelschachts (1) ausgebildet ist, indem am Basisteil (11) ein Adapter (14) zur Anordnung am Ende des Kabelrohres (2) angeordnet ist.

7. Vorrichtung (10) nach Anspruch 6, **dadurch gekennzeichnet, dass** die Klemmvorrichtung (13) lösbar mit dem Schlitten (12) verbunden ist.

8. Vorrichtung (10) nach Anspruch 6 oder 7, **dadurch gekennzeichnet, dass** der Adapter (14) rotationssymmetrisch ausgebildet ist.

9. Vorrichtung (10) nach einem der Ansprüche 6 bis 8, **dadurch gekennzeichnet, dass** die Klemmvorrichtung (13) zumindest einen Hydraulikzylinder (20) umfasst.

10. Vorrichtung (10) nach einem der Ansprüche 6 bis 9, **dadurch gekennzeichnet, dass** die Klemmvorrichtung (13) zwei, vorzugsweise profilierte, Klemmplatten (23) aufweist.

11. Vorrichtung (10) nach einem der Ansprüche 6 bis 10, **dadurch gekennzeichnet, dass** der Antrieb (16) zur Erzielung einer translatorischen Bewegung des Schlittens (12) gegenüber dem Basisteil (11) durch zumindest einen, vorzugsweise zwei, Hydraulikzylinder (19) gebildet ist.

12. Vorrichtung (10) nach einem der Ansprüche 6 bis 11, **dadurch gekennzeichnet, dass** der Basisteil (11) durch zwei parallele Schienen (17) gebildet ist, zwischen welchen das aus dem Kabelrohr (2) zu ziehende Kabelelement (5) anordenbar ist.

13. Vorrichtung (10) nach einem der Ansprüche 6 bis 12, **dadurch gekennzeichnet, dass** eine Vorrichtung zum Einbringen eines Lösungsmittels in das Kabelrohr (2) vorgesehen ist.

14. Vorrichtung (10) nach einem der Ansprüche 6 bis 13, **dadurch gekennzeichnet, dass** am Basiselement (11) Stützelemente (22) oder Vorrichtungen (21) zur Anbringung von Stützelementen (22) vorgesehen sind.

15. Vorrichtung (10) nach einem der Ansprüche 6 bis 14, **dadurch gekennzeichnet, dass** eine Einrichtung zum Abschneiden des Kabelelements (5) vorgesehen ist.

## Claims

1. A method for extracting cable elements (5) from cable pipes (2) in cable ducts (1), wherein the cable element (5) is clamped by a clamping apparatus (13) and a tensile force (F) is applied onto the cable element (5) and the cable element (5) is extracted from the cable pipe (2), with the cable element (5) being clamped within the cable duct (1) and extracted from the cable pipe (2) step by step by pulling the cable element (5) out of the cable pipe (2) by a section (Δx), essentially in the longitudinal direction of the cable element (5) after clamping it by the clamping apparatus (13), then opening the clamping apparatus (13) and moving it back by the section (Δx) in the direction of the cable pipe (2), clamping the cable element (5) again and extracting it by the section (Δx), **characterised in that** the clamping apparatus (13) is moved substantially in the longitudinal direction of the cable element (5) by the sections (Δx) on a skid (12) in a translational manner with respect to a base part (11), and that via a drive unit (16) arranged between the base part (11) and the skid (12) a tensile force (F) is applied onto the cable element (5) substantially in the longitudinal direction of the cable element for achieving the translational movement of the skid (12) with respect to the base part (11), and that the base part (11), via an adapter (14) to be arranged at the end of the cable pipe (2), is braced against a wall (15) of the cable shaft (1) surrounding the cable pipe (2).

2. The method according to claim 1, **characterised in that** the cable element (5) extracted from the cable pipe (2) is being cut off.

3. The method according to claim 1 or 2, **characterised in that** a solvent is fed into the cable pipe (2).

4. The method according to claim 3, **characterised in that** the solvent is atomized and blown into the cable pipe (2).

5. The method according to any one of claims 1 to 4, **characterised in that** the cable element (5) is being clamped hydraulically.

6. An apparatus (10) for extracting cable elements (5) from cable pipes (2) in cable ducts (1), with a clamping apparatus (13) for clamping the cable element (5) and an apparatus (8) for applying a tensile force (F) onto the cable element (5) for extracting the cable element (5) from the cable pipe (2), **characterised in that** the clamping apparatus (13) is arranged on a skid (12), which skid (12) is arranged essentially in the longitudinal direction of the cable element (5) so as to move in a translational manner on a base part (11) and **in that** the apparatus (8) for applying a tensile force (F) onto the cable element (5) via at least one drive unit (16) arranged between the base part (11) and the skid (12) is provided for achieving the translational movement of the skid (12) with respect to the base part (11), and **in that** the base part (11) is designed to be braced against a wall (15) of the cable shaft (1) surrounding the cable pipe (2) by an adapter (14) to be arranged at the end of the cable pipe (2) being arranged on the base part (11).

7. The apparatus (10) according to claim 6, **characterised in that** the clamping apparatus (13) is releasably connected to the skid (12).

8. The apparatus (10) according to claim 6 of 7, **characterised in that** the adapter (14) is designed rotationally symmetrically.

9. The apparatus (10) according to any one of claims 6 to 8, **characterised in that** the clamping apparatus (13) comprises at least one hydraulic cylinder (20).

10. The apparatus (10) according to any one of claims 6 to 9, **characterised in that** the clamping apparatus (13) comprises two clamping plates (23) that preferably have profiles.

11. The apparatus (10) according to any one of claims 6 to 10, **characterised in that** the drive unit (16) for achieving a translational movement of the skid (12) with respect to the base part (11) is formed by at least one, preferably two, hydraulic cylinders (19).

12. The apparatus (10) according to any one of claims 6 to 11, **characterised in that** the base part (11) is formed by two parallel tracks (17) between which the cable element (5) to be extracted from the cable pipe (2) is arrangeable.

13. The apparatus (10) according to any one of claims 6 to 12, **characterised in that** a device for feeding a solvent into the cable pipe (2) is provided.

14. The apparatus (10) according to any one of claims 6 to 13, **characterised in that** on the base element (11) supporting elements (22) or devices (21) for the attachment of supporting elements (22) are provided.

15. The apparatus (10) according to any one of claims 6 to 14, **characterised in that** a means for cutting off the cable element (5) is provided.

## Revendications

1. Procédé d'extraction d'éléments de câbles (5) hors de gaines de câbles (2) dans des gouttières de câbles (1), l'élément de câble (5) étant serré à l'aide d'un dispositif de serrage (13) et, sur l'élément de câble (5), est exercée une force de traction (F) et l'élément de câble (5) étant tiré hors de la gaine de câble (2), et l'élément de câble (5) étant serré dans la gouttière de câble (1) et tiré par étapes hors de la gaine de câble (2) en tirant l'élément de câble (5) après le serrage avec le dispositif de serrage (13) sur une distance (Δx) globalement dans la direction longitudinale de l'élément de câble (5) hors de la gaine de câble (2), puis le dispositif de serrage (13) est ouvert et reculé de la distance (Δx) dans la direction de la gaine de câble (2), l'élément de câble (5) est à nouveau serré et extrait de la distance (Δx), **caractérisé en ce que** le dispositif de serrage (13) est déplacé sur un chariot (12) globalement dans la direction longitudinale de l'élément de câble (5) des distances (Δx) avec un mouvement de translation par rapport à une partie de base (11) et avec un dispositif d'entraînement (16) disposé entre la partie de base (11) et le chariot (12), afin d'obtenir le mouvement de translation du chariot (12) par rapport à la partie de base (11), une force de traction (F) est appliquée à l'élément de câble (5) globalement dans la direction longitudinale de l'élément de câble et la partie de base (11) étant appuyée, à l'aide d'un adaptateur (14), destiné à être disposé à l'extrémité de la gaine de câble (2), contre une paroi (15) de la gouttière de câble (1) entourant la gaine de câble (2).

2. Procédé selon la revendication 1, **caractérisé en ce que** l'élément de câble (5) extrait de la gaine de câble (2) est découpé.

3. Procédé selon la revendication 1 ou 2, **caractérisé en ce que**, dans la gaine de câble (2), un solvant est introduit.

4. Procédé selon la revendication 3, **caractérisé en ce que** le solvant est pulvérisé et soufflé dans la gaine de câble (2).

5. Procédé selon l'une des revendications 1 à 4, **caractérisé en ce que** l'élément de câble (5) est serré hydrauliquement.

6. Dispositif (10) pour l'extraction d'éléments de câbles (5) hors de gaines de câbles (2) dans des gouttières de câbles (1), avec un dispositif de serrage (13) pour le serrage de l'élément de câble (5) et un dispositif (8) permettant d'appliquer une force de traction (F) sur l'élément de câble (5) pour extraire d'élément de câble (5) hors de la gaine de câble (2), **caractérisé en ce que** le dispositif de serrage (13) est disposé sur un chariot (12), ce chariot (12) étant disposé de manière mobile en translation globalement dans la direction longitudinale de l'élément de câble (5) sur une partie de base (11) et **en ce que** le dispositif (8) d'application d'une force de traction (F) sur l'élément de câble (5) est équipe d'au moins un dispositif d'entraînement (16), disposé entre la partie de base (11) et le chariot (12), afin d'obtenir le mouvement en translation du chariot (12) par rapport à la partie de base (11) et **en ce que** la partie de base (11) étant conçue pour s'appuyer contre une paroi (15) de la gouttière de câble (1) entourant la gaine de câble (2), du fait qu'un adaptateur (14) destiné à être disposé à l'extrémité de la gaine de câble (2), étant disposé sur la partie de base (11).

7. Dispositif (10) selon la revendication 6, **caractérisé en ce que** le dispositif de serrage (13) est relié de manière amovible au chariot (12).

8. Dispositif (10) selon la revendication 6 ou 7, **caractérisé en ce que** l'adaptateur (14) est conçu de façon symétrique en rotation.

9. Dispositif (10) selon l'une des revendications 6 à 8, **caractérisé en ce que** le dispositif de serrage (13) comprend au moins un vérin hydraulique (20).

10. Dispositif (10) selon l'une des revendications 6 à 9, **caractérisé en ce que** le dispositif de serrage (13) comprend deux plaques de serrage (23), de préférence profilées.

11. Dispositif (10) selon l'une des revendications 6 à 10, **caractérisé en ce que** le dispositif d'entraînement (16) permettant d'obtenir un mouvement en translation du chariot (12) par rapport à la partie de base (11) est constitué d'un, de préférence de deux vérins hydrauliques (19).

12. Dispositif (10) selon l'une des revendications 6 à 11, **caractérisé en ce que** la partie de base (11) est constituée de deux rails (17) parallèles, entre lesquels l'élément de câble (5) à extraire de la gaine de câble (2) peut être disposé.

13. Dispositif (10) selon l'une des revendications 6 à 12, **caractérisé en ce qu'**un dispositif d'introduction d'un solvant est prévu dans la gaine de câble (2).

14. Dispositif (10) selon l'une des revendications 6 à 13, **caractérisé en ce que**, sur l'élément de base (11), des éléments d'appui (22) ou des dispositifs (21) de fixation d'éléments d'appui (22) sont prévus.

15. Dispositif (10) selon l'une des revendications 6 à 14, **caractérisé en ce qu'**un dispositif de découpe de l'élément de câble (5) est prévu.
